# EUROPEAN PATENT APPLICATION

(11) **EP 1 843 444 A2**
(43) Date of publication of application: **10.10.2007**
(21) Application number: 07101226.4
(22) Date of filing: 26.01.2007
(51) Int. Cl.: H02J 3/00

(54) **Apparatus and Method for Controlling Power of Fixing Unit**

(30) Priority: 03.04.2006 KR 20060030148
(71) Applicant: Samsung Electronics Co., Ltd., Suwon-si 442-742 Gyeonggi-do (KR)
(72) Inventor: Na, Tae-kwon, Seoul (KR); Shin, Bong-su 706-603 Salgugol, Yeongtong-gu Gyeonggi-do Suwon-si (KR)
(74) Representative: Waddington, Richard

(57) **Abstract**

Provided is an apparatus and method for controlling the power supplied to a fixing unit (110) included in an image forming device. The power supplied to the fixing unit (110) is controlled by selecting a phase control method and a period control method using a select time or based on a temperature of the fixing unit (110).

## Description

The present invention relates to an image forming device such as a printer, a facsimile, or a multi function peripheral (MFP). More particularly, the present invention relates to an apparatus and method for controlling power supplied to a fixing unit included in an image forming device.

Image forming devices form a print image using a developer, such as toner, to provide a printed result to a user. The printed image is formed by fixing the developer onto a print medium so as to correspond to print data that is input from a host device. The developer-fixed print medium is then discharged.

Such an image forming device can perform a fixing job using a heating roller that includes a resistor to generate heat. To perform a fixing job according to the above method, the surface temperature of the heating roller must be maintained at a target fixing temperature, such as around 180°C.

When the image forming device receives a print command for the first time after the image forming device is turned on or receives a print command in a stand-by mode, the image forming device goes into a print mode. In this case, to reduce the amount of time it takes for the printer to be ready from when the print command is received to when a first printed result is discharged, the surface temperature of the heating roller must be increased to the target fixing temperature more rapidly.

However, if more power is supplied to the heating roller included in a fixing unit to reduce the wait time, a resistance of the heating roller decreases, thereby causing an excessive inrush current. The excessive inrush current deepens a flicker characteristic.

Accordingly, there is a need an improved apparatus and method for controlling power of a fixing unit to rapidly increase the surface temperature of the heating roller while preventing an excessive inrush current and minimizing flicker.

Exemplary embodiments of the present invention address at least the above problems and/or disadvantages and provide at least the advantages described below.

The present invention provides an apparatus and method for controlling the power supplied to a fixing unit by controlling an amount of power supplied to the fixing unit by selecting a phase control method and a period control method at a select time or based on a temperature of the fixing unit.

According to the present invention there is provided an apparatus and method as set forth in the appended claims. Preferred features of the invention will be apparent from the dependent claims, and the description which follows.

According to an aspect of the present invention, there is provided apparatus for controlling power supplied to a fixing unit by controlling amount of an alternating current (AC) power supplied to the fixing unit, the apparatus comprising a phase controller for controlling the AC power based on a phase of the AC power until a select time; and a period controller for controlling the AC power based on a period of the AC power after the select time.

The phase controller may be operable to control the AC power so that the phase of the AC power supplied to the fixing unit is gradually increased.

The period controller may be operable to control the AC power so that the AC power is supplied to the fixing unit only during a select period.

According to another aspect of the present invention, there is provided apparatus for controlling power supplied to a fixing unit by controlling an amount of alternating current (AC) power supplied to the fixing unit, the apparatus comprising a phase controller for controlling the AC power based on a phase of the AC power if a temperature of the fixing unit is outside of a reference temperature range; and a period controller for controlling the AC power based on a period of the AC power if the temperature of the fixing unit is within the reference temperature range.

The phase controller may be operable to control the AC power so that the phase of the AC power supplied to the fixing unit is gradually increased.

The period controller may be operable to control the AC power so that the AC power is supplied to the fixing unit only during a select period.

According to another aspect of an exemplary embodiments of the present invention, there is provided a method of controlling power supplied to a fixing unit by controlling an amount of alternating current (AC) power supplied to the fixing unit, the method comprising (a) controlling the AC power based on a phase of the AC power until a select time; and (b) controlling the AC power based on a period of the AC power after the select time.

In operation (a), the AC power may be controlled so that the phase of the AC power supplied to the fixing unit is gradually increased.

In operation (b), the AC power may be controlled so that the AC power is supplied to the fixing unit only during a select period.

According to another aspect of the present invention, there is provided a method of controlling power supplied to a fixing unit by controlling an amount of alternating current (AC) power supplied to the fixing unit, the method comprising (a) controlling the AC power based on a phase of the AC power if a temperature of the fixing unit is outside of a reference temperature range; and (b) controlling the AC power based on a period of the AC power if the temperature of the fixing unit is within the reference temperature range.

In operation (a), the AC power may be controlled so that the phase of the AC power supplied to the fixing unit is gradually increased.

In operation (b), the AC power may be controlled so that the AC power is supplied to the fixing unit only during a select period.

According to another aspect of the present invention, there is provided a method of controlling power supplied to a fixing unit by controlling an amount of alternating current (AC) power supplied to the fixing unit, the method comprising (a) controlling the AC power based on a phase of the AC power; (b) if a temperature of the fixing unit exceeds a reference temperature, determining whether a select time lapses from when the temperature of the fixing unit exceeds the reference temperature or whether the temperature of the fixing unit is within a reference temperature range; and (c) if it is determined that the select time lapses or the temperature of the fixing unit is within the reference temperature range, controlling the AC power based on a period of the AC.

Operation (b) may comprise sensing the temperature of the fixing unit; if the sensed temperature exceeds the reference temperature, measuring an amount of time from the moment when the sensed temperature exceeds the reference temperature; and determining whether the temperature of the fixing unit is within the reference temperature range or whether the measured time exceeds the select time.

In operation (a), the AC power may be controlled so that the phase of the AC power supplied to the fixing unit is gradually increased.

In operation (b), the AC power may be controlled so that the AC power is supplied to the fixing unit only during a select period.

According to another aspect of an exemplary embodiments of the present invention, there is provided a computer readable recording medium storing a computer readable program for executing any of the methods described above.

Other aspects, advantages, and salient features of the invention will become apparent to those skilled in the art from the following detailed description, which, taken in conjunction with the annexed drawings, discloses exemplary embodiments of the invention.

For a better understanding of the invention, and to show how embodiments of the same may be carried into effect, reference will now be made, by way of example, to the accompanying diagrammatic drawings in which:
FIG. 1 is a block diagram of an apparatus for controlling power of a fixing unit according to an exemplary embodiment of the present invention;
FIG. 2 is a block diagram of an apparatus for controlling power of a fixing unit according to another exemplary embodiment of the present invention;
FIG. 3 is a flowchart illustrating a method of controlling power of a fixing unit according to an exemplary embodiment of the present invention;
FIG. 4 is a flowchart illustrating a method of controlling power of a fixing unit according to another exemplary embodiment of the present invention;
FIG. 5 is a flowchart illustrating a method of controlling power of a fixing unit according to another exemplary embodiment of the present invention; and
FIGS. 6A, 6B, and 6C are diagrams for explaining an apparatus and method for controlling power of a fixing unit according to an exemplary embodiment of the present invention.

Throughout the drawings, the same drawing reference numerals will be understood to refer to the same elements, features, and structures.

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness. The present invention will now be described more fully with reference to the accompanying drawings, in which exemplary embodiments of the invention are shown.

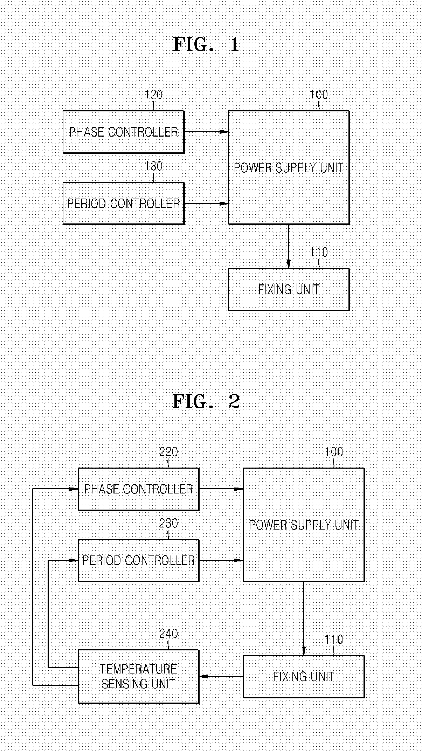

FIG. 1 is a block diagram of an apparatus for controlling the power of a fixing unit 110 according to an exemplary embodiment of the present invention. Referring to FIG. 1, the apparatus includes a phase controller 120 and a period controller 130.

The phase controller 120 and the period controller 130 control a power supply unit 100 to supply a selected amount of alternating current (AC) power to the fixing unit 110.

The fixing unit 110 fixes a developer, such as toner, onto a print medium using heat generated by the AC power supplied from the power supply unit 100.

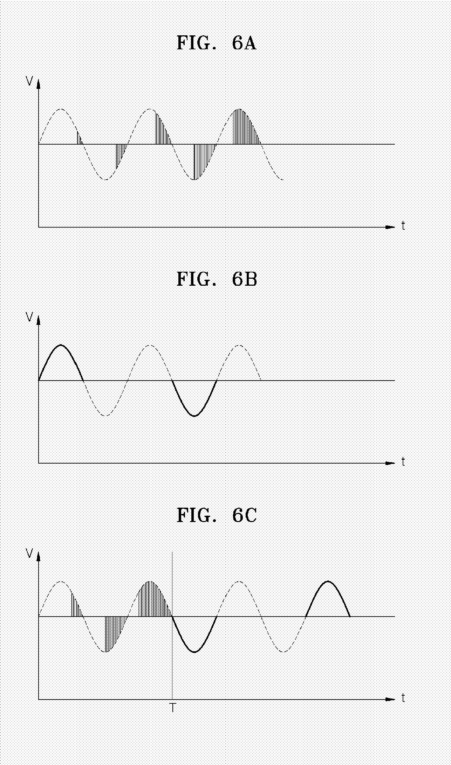

The phase controller 120 controls the time duration in which the AC power is supplied from the power supply unit 100 to the fixing unit 110 based on a phase as illustrated in FIG. 6A. In this case, the phase controller 120 controls the AC power so that a phase of the AC power supplied to the fixing unit 110 is gradually increased.

The period controller 130 controls a time duration in which the AC power is supplied from the power supply unit 100 to the fixing unit 110 based on a period after a time *T .* The period controller 130 may control the time duration in a half-period power pulse control method as illustrated in FIG. 6B. The half-period power pulse control method is a control method of supplying power by passing only pulses corresponding to a select period, that is, by applying the AC power in only a certain period and not applying the AC power in the other period.

By doing this, as illustrated in FIG. 6C, the phase controller 120 controls the time duration in which the AC power is supplied from the power supply unit 100 to the fixing unit 110 based on the phase before time T, and the period controller 130 controls the time duration in which the AC power is supplied from the power supply unit 100 to the fixing unit 110 based on the period after time T.

FIG. 2 is a block diagram of an apparatus for controlling the power of the fixing unit 110 according to another exemplary embodiment of the present invention. Referring to FIG. 2, the apparatus includes a phase controller 220, a period controller 230, and a temperature sensing unit 240.

The phase controller 220 and the period controller 230 control the power supply unit 100 to supply a selected amount of alternating current (AC) power to the fixing unit 110.

The fixing unit 110 fixes a developer, such as toner, onto a print medium using heat generated by the AC power supplied from the power supply unit 100.

If a temperature sensed by the temperature sensing unit 240 is below a reference temperature, the phase controller 220 controls the time duration in which the AC power is supplied from the power supply unit 100 to the fixing unit 110 based on the phase as illustrated in FIG. 6A. In this case, the phase controller 220 controls the AC power so that a phase of the AC power supplied to the fixing unit 110 is gradually increased.

If the temperature sensed by the temperature sensing unit 240 is higher than the reference temperature, the period controller 230 controls the time duration in which the AC power is supplied from the power supply unit 100 to the fixing unit 110 based on the period. The period controller 230 may control the time duration in the half-period power pulse control method as illustrated in FIG. 6B. The half-period power pulse control method is a control method of supplying power by passing only pulses corresponding to a select period, that is, by applying the AC power in only a certain period and not applying the AC power in the other period.

The temperature sensing unit 240 senses the temperature of the fixing unit 110 by having a sensor disposed at a select location on the fixing unit 110.

By doing this, as illustrated in FIG. 6C, if the temperature sensed by the temperature sensing unit 240 is below the reference temperature, the phase controller 220 controls the time duration in which the AC power is supplied from the power supply unit 100 to the fixing unit 110 based on the phase, and if the temperature sensed by the temperature sensing unit 240 is higher than the reference temperature, the period controller 230 controls the time duration in which the AC power is supplied from the power supply unit 100 to the fixing unit 110 based on the period.

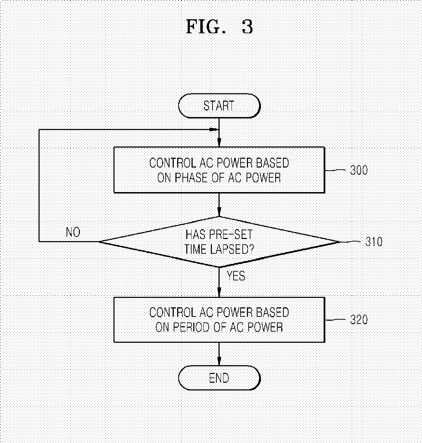

FIG. 3 is a flowchart illustrating a method of controlling the power of a fixing unit according to an exemplary embodiment of the present invention.

Referring to FIG. 3, in operation 300, a time duration in which AC power is supplied to the fixing unit is controlled based on a phase as illustrated in FIG. 6A. In this case, the AC power is controlled so that a phase of the AC power supplied to the fixing unit is gradually increased.

In operation 310, it is determined whether a time T has lapsed.

If it is determined that the time T has lapsed, in operation 320, the time duration in which the AC power is supplied to the fixing unit is controlled based on a period. In this case, the time duration may be controlled in the half-period power pulse control method as illustrated in FIG. 6B. The half-period power pulse control method is a control method of supplying power by passing only pulses corresponding to a select period, that is, by applying the AC power in only a certain period and not applying the AC power in the other period.

By doing this, as illustrated in FIG. 6C, the time duration in which the AC power is supplied to the fixing unit is controlled based on the phase before the time T, and the time duration in which the AC power is supplied to the fixing unit is controlled based on the period after the time T.

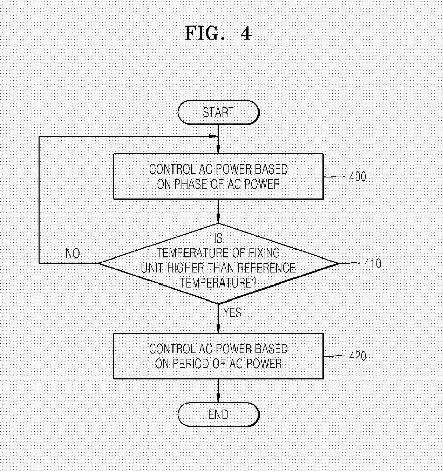

FIG. 4 is a flowchart illustrating a method of controlling the power of a fixing unit according to another exemplary embodiment of the present invention.

Referring to FIG. 4, in operation 400, a time duration in which AC power is supplied to the fixing unit is controlled based on a phase as illustrated in FIG. 6A. In this case, the AC power is controlled so that a phase of the AC power supplied to the fixing unit is gradually increased.

In operation 410, it a temperature of the fixing unit is compared to a reference temperature.

If the temperature of the fixing unit is higher than the reference temperature, in operation 420, the time duration in which the AC power is supplied to the fixing unit is controlled based on a period. In this case, the time duration may be controlled in the half-period power pulse control method as illustrated in FIG. 6B. The half-period power pulse control method is a control method of supplying power by passing only pulses corresponding to a select period, that is, by applying the AC power in only a certain period and not applying the AC power in the other period.

By doing this, as illustrated in FIG. 6C, if the temperature of the fixing unit is below the reference temperature, the time duration in which the AC power is supplied to the fixing unit is controlled based on the phase, and if the temperature of the fixing unit is higher than the reference temperature, the time duration in which the AC power is supplied to the fixing unit is controlled based on the period.

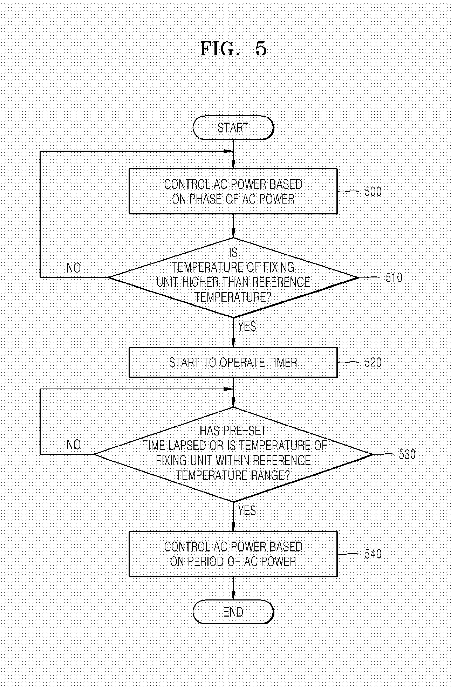

FIG. 5 is a flowchart illustrating a method of controlling the power of a fixing unit according to another exemplary embodiment of the present invention.

Referring to FIG. 5, in operation 500, a time duration in which AC power is supplied to the fixing unit is controlled based on a phase as illustrated in FIG. 6A. In this case, the AC power is controlled so that a phase of the AC power supplied to the fixing unit is gradually increased.

In operation 510, a temperature of the fixing unit is compared to a reference temperature.

If the temperature of the fixing unit is higher than the reference temperature, in operation 520, a timer starts to operate and measures a lapse time from the moment when the temperature of the fixing unit exceeds the reference temperature.

In operation 530, it is determined whether the timer senses a time *T* or whether the temperature of the fixing unit is within a reference temperature range.

If the timer senses the time *T* or the temperature of the fixing unit is within the reference temperature range, in operation 540, the time duration in which the AC power is supplied to the fixing unit is controlled based on a period. In this case, the time duration may be controlled in the half-period power pulse control method as illustrated in FIG. 6B. The half-period power pulse control method is a control method of supplying power by passing only pulses corresponding to a select period, that is, by applying the AC power in only a certain period and not applying the AC power in the other period.

Exemplary embodiments of the present invention can also be embodied as computer readable codes on a computer (including any device having an information processing function) readable recording medium. The computer readable recording medium is any data storage device that can store programs or data which can be thereafter read by a computer system. Examples of the computer readable recording medium include read-only memory (ROM), random-access memory (RAM), CD-ROMs, magnetic tapes, hard disks, floppy disks, flash memory, optical data storage devices, and so on.

As described above, in an apparatus and method for controlling the power of a fixing unit according to the exemplary embodiments of the present invention, power supplied to the fixing unit is controlled by selecting a phase control method and a period control method using a time T or a temperature of the fixing unit.

Since the power supplied to the fixing unit at an initial stage is controlled using the phase control method, a warm-up time can be reduced. Further, an inrush current can be reduced, thereby increasing a flicker characteristic. In addition, since the power supplied to the fixing unit is controlled using the phase control method at only the initial stage, electromagnetic interference (EMI) generated by using the phase control method can be reduced. In addition, since the power supplied to the fixing unit is controlled using the phase control method if the time T lapses or the temperature of the fixing unit is higher than a reference temperature, the temperature of the fixing unit does not have to be precisely sensed, thereby simplifying a configuration of a process and components.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for controlling power supplied to a fixing unit (110) by controlling an amount of alternating current (AC) power supplied to the fixing unit (110), the apparatus comprising:
a phase controller (120) for controlling the AC power based on a phase of the AC power until a select time; and
a period controller (130) for controlling the AC power based on a period of the AC power after the select time.

2. The apparatus of claim 1, wherein the phase controller (120) is operable to control the AC power so that the phase of the AC power supplied to the fixing unit (110) is gradually increased.

3. The apparatus of claim 1 or claim 2, wherein the period controller (130) is operable to control the AC power so that the AC power is supplied to the fixing unit (110) only during a select period.

4. An apparatus for controlling power supplied to a fixing unit (110) by controlling an amount of alternating current (AC) power supplied to the fixing unit (110), the apparatus comprising:
a phase controller (120) for controlling the AC power based on a phase of the AC power if a temperature of the fixing unit (110) is outside of a reference temperature range; and
a period controller (130) for controlling the AC power based on a period of the AC power if the temperature of the fixing unit (110) is within the reference temperature range.

5. The apparatus of claim 4, wherein the phase controller (120) is operable to control the AC power so that the phase of the AC power supplied to the fixing unit (110) is gradually increased.

6. The apparatus of claim 4 or claim 5, wherein the period controller (130) is operable to control the AC power so that the AC power is supplied to the fixing unit (110) only during a select period.

7. A method of controlling power supplied to a fixing unit (110) by controlling an amount of alternating current (AC) power supplied to the fixing unit (110), the method comprising:
(a) controlling the AC power based on a phase of the AC power until a select time; and
(b) controlling the AC power based on a period of the AC power after the select time.

8. The method of claim 7, wherein in operation (a), the AC power is controlled so that the phase of the AC power supplied to the fixing unit (110) is gradually increased.

9. The method of claim 7or claim 8, wherein in operation (b), the AC power is controlled so that the AC power is supplied to the fixing unit (110) only during a select period.

10. A method of controlling power supplied to a fixing unit (110) by controlling an amount of alternating current (AC) power supplied to the fixing unit (110), the method comprising:
(a) controlling the AC power based on a phase of the AC power if a temperature of the fixing unit (110) is outside of a reference temperature range; and
(b) controlling the AC power based on a period of the AC power if the temperature of the fixing unit (110) is within the reference temperature range.

11. The method of claim 10, wherein in operation (a), the AC power is controlled so that the phase of the AC power supplied to the fixing unit (110) is gradually increased.

12. The method of claim 10 or claim 11, wherein in operation (b), the AC power is controlled so that the AC power is supplied to the fixing unit (110) only during a select period.

13. A method of controlling power supplied to a fixing unit (110) by controlling an amount of alternating current (AC) power supplied to the fixing unit (110), the method comprising:
(a) controlling the AC power based on a phase of the AC power;
(b) if a temperature of the fixing unit (110) exceeds a reference temperature, determining whether a select time lapses from when the temperature of the fixing unit (110) exceeds the reference temperature or whether the temperature of the fixing unit (110) is within a reference temperature range; and
(c) if it is determined that the select time lapses or the temperature of the fixing unit (110) is within the reference temperature range, controlling the AC power based on a period of the AC power.

14. The method of claim 13, wherein operation (b) comprises:
sensing the temperature of the fixing unit (110);
if the sensed temperature exceeds the reference temperature, measuring an amount of time from the moment when the sensed temperature exceeds the reference temperature; and
determining whether the temperature of the fixing unit (110) is within the reference temperature range or whether the measured time exceeds the select time.

15. The method of claim 13 or claim 14, wherein in operation (a), the AC power is controlled so that the phase of the AC power supplied to the fixing unit (110) is gradually increased.

16. The method of any one of claims 13 to 15, wherein in operation (b), the AC power is controlled so that the AC power is supplied to the fixing unit (110) only during a select period.

17. A computer readable recording medium storing a computer readable program for executing the method of controlling power supplied to a fixing unit (110) by controlling an amount of alternating current (AC) power supplied to the fixing unit (110), the method comprising:
(a) controlling the AC power based on a phase of the AC power until a select time; and
(b) controlling the AC power based on a period of the AC power after the select time.

18. A computer readable recording medium storing a computer readable program for executing the method of controlling power supplied to a fixing unit (110) by controlling an amount of alternating current (AC) power supplied to the fixing unit (110), the method comprising:
(a) controlling the AC power based on a phase of the AC power if a temperature of the fixing unit (110) is outside of a reference temperature range; and
(b) controlling the AC power based on a period of the AC power if the temperature of the fixing unit (110) is within the reference temperature range.

19. A computer readable recording medium storing a computer readable program for executing the method of controlling power supplied to a fixing unit (110) by controlling an amount of alternating current (AC) power supplied to the fixing unit (110), the method comprising:
(a) controlling the AC power based on a phase of the AC power;
(b) if a temperature of the fixing unit (110) exceeds a reference temperature, determining whether a select time lapses from when the temperature of the fixing unit (110) exceeds the reference temperature or whether the temperature of the fixing unit (110) is within a reference temperature range; and
(c) if it is determined that the select time lapses or the temperature of the fixing unit (110) is within the reference temperature range, controlling the AC power based on a period of the AC power.

20. A method of controlling power supplied to a fixing unit (110) by controlling an amount of alternating current (AC) power supplied to the fixing unit (110), the method comprising:
(a) controlling the AC power based on a phase of the AC power;
(b) initiating a timer if a temperature of the fixing unit (110) is higher than a reference temperature; and
(c) controlling the AC power based on a period of the AC power if the temperature of the fixing unit (110) is within a reference temperature range or if a select amount of time has lapsed since the timer was initiated.

21. A method of controlling power supplied to a fixing unit (110) by controlling an amount of alternating current (AC) power supplied to the fixing unit (110), the method comprising:
(a) controlling the AC power based on a phase of the AC power;
(b) comparing a temperature of the fixing unit (110) to a reference temperature, wherein if the temperature of the fixing unit (110) is higher than the reference temperature, a timer is initiated, else the controlling the AC power based on the phase of the AC power is continued until the temperature of the fixing unit (110) is higher than the reference temperature; and
(c) if the timer has been initiated, comparing the temperature of the fixing unit (110) to the reference temperature and determining if a select amount of time has lapsed since the timer was initiated, wherein if the temperature of the fixing unit (110) is within a reference temperature range or if the select amount of time has lapsed, controlling the AC power based on a period of the AC power, else controlling the AC power based on the phase of the AC power is continued until the temperature of the fixing unit (110) is within the reference temperature range or the select amount of time has lapsed.
